# EUROPÄISCHE PATENTSCHRIFT

(11) **EP 2 969 646 B1**
(45) Veröffentlichungstag und Bekanntmachung des Hinweises auf die Patenterteilung: **27.06.2018**
(21) Anmeldenummer: 14707756.4
(22) Anmeldetag: 03.03.2014
(51) Int. Cl.: B60P 1/52, B65D 19/42, B65D 88/54

(54) **LADUNGSTRÄGER ZUR VERWENDUNG IN EINEM LOGISTIKSYSTEM**
LOAD CARRIER FOR USE IN A LOGISTICS SYSTEM
SUPPORT DE CHARGEMENT DESTINÉ À ÊTRE UTILISÉ DANS UN SYSTÈME LOGISTIQUE

(30) Priorität: 12.03.2013 DE 102013204260
(43) Veröffentlichungstag der Anmeldung: 20.01.2016
(73) Patentinhaber: Buse, Heinz, 26160 Bad Zwischenahn (DE)
(72) Erfinder: Buse, Heinz, 26160 Bad Zwischenahn (DE)
(74) Vertreter: Eisenführ Speiser
(86) Internationale Anmeldenummer: PCT/EP2014/054077
(87) Internationale Veröffentlichungsnummer: WO 2014/139820

(56) Entgegenhaltungen:
- DE-A1-102010 063 310
- US-A1- 2008 250 986

## Beschreibung

Die vorliegende Erfindung betrifft einen Ladungsträger zur Verwendung in einem Logistiksystem, um in einer Beförderungsrichtung A von der Ladefläche eines Fahrzeugs übernommen und/oder an die Ladefläche des Fahrzeugs übergeben zu werden, wobei der Ladungsträger im Wesentlichen Ausmaße aufweist, die der Ladefläche des Fahrzeugs angepasst sind, und wobei der Ladungsträger auf seiner Unterseite mehrere in Rollenkästen eingelassene Rollen aufweist, um auf diesen Rollen in der Beförderungsrichtung (A) verfahren zu werden.

Ladungsträger der vorgenannten Art kommen in Logistiksystemen zum Einsatz, die zum Umschlag von Waren oder zur Kommissionierung solcher Waren vielerorts eingesetzt werden.

Bei bereits vorhandenen Lagern oder Kommissionierungseinheiten gibt es eine Vielzahl von Andockstationen (auch als Hallentore bezeichnet), an die die LKWs jeweils mit ihrer Rückseite heranfahren können, um die Güter zu übernehmen. Solche Güterlager oder Kommissionierungseinheiten bestehen in einer großen Vielzahl und häufig gibt es die Möglichkeit, dass eine Vielzahl von Fahrzeugen gleichzeitig an die Andockstationen, die jeweils in einer Gebäudewand miteinander fluchtend nebeneinanderliegen, heranfährt. So können ebenso viele LKWs andocken, wie entsprechende Andockstationen, also Gebäudewandöffnungen/Hallentore, vorhanden sind. Dabei sind diese Andockstationen meist auf der Höhe der Ladeflächen der LKWs angeordnet, damit der Lagerboden und die Ladefläche des LKWs eine Ebene bilden und der LKW z.B. durch das Befahren durch Gabelstapler ent- und beladen werden kann. Da bei dieser Art des Ent- und Beladens jeder Gabelstapler oder sonstige Transporteinrichtung lediglich eine oder einige wenige Warenpaletten transportieren kann, ist die Art des Be- und Entladens sehr zeitintensiv. Auch kann der zu be- und entladende LKW während der gesamten Zeit des Be- und Entladens nicht von der Andockstation wegbewegt werden.

Mit dem Logistiksystem des Dokuments EP 1 808 387 A2 wird ein System offenbart, bei dem die zu be- und entladende Fracht auf einer Güterplattform, auch als Ladungsträger oder Ladungsträger bezeichnet, gelagert wird und die gesamte Ladungsträger mitsamt der Fracht vom LKW bzw. auf den LKW in einem Arbeitsvorgang verfrachtet wird. D.h. der gesamte Ladungsträger mit den Gütern ist in einem Schritt an ein Fahrzeug übergebbar oder kann in einem Schritt von einem Fahrzeug übernommen werden.

Der Erfindung liegt die Aufgabe zugrunde, den Ladungsträger des o.g. Logistiksystems weiter zu verbessern.

Ein gattungsgemäßer Ladungsträger ist beispielsweise aus DE 10 2010 063 310 bekannt.

Der eingangs bezeichnete Ladungsträger dient zum Befördern verschiedenster Waren. Diese können in palettierter Form oder als Stückgut vorliegen. Damit der Ladungsträger für verschiedenste Arten von Waren genutzt werden kann, ist es in der Praxis erforderlich, die unterschiedlichsten Arten von Waren und Gütern zuverlässig auf dem Ladungsträger befestigen zu können.

Bei bekannten Ladungsträgersystemen, wie dem eingangs bezeichneten oder den aus den vorgenannten Druckschriften bekannten, ist es erforderlich, seitlich an den Ladungsträgern Stützmittel, beispielsweise in Form von Geländern und/oder Streben anzubringen, mittels welcher Zurrgurte und ähnliche Hilfsmittel am Ladungsträger befestigt werden können. Alternativ ist bei bekannten Ladungsträgern in der Vergangenheit so verfahren worden, dass Spannmittel, beispielsweise Gurte, um den gesamten Ladungsträger herumgeschlungen wurden, um auf diese Weise Ladung festbinden zu können. Die Montage und Demontage solcher Spannmittel ist sehr aufwendig, da sie unterm Ladungsträger hindurch gefädelt werden muss. Der Ab- und Anbau von Geländern und ähnlichem Gerät hat sich in der Praxis als zu aufwendig erwiesen, um für die meisten Verpackungsaufgaben bis auf Spezialfälle eingesetzt zu werden.

Vor diesem Hintergrund lag der Erfindung die Aufgabe zugrunde, die im Stand der Technik vorgefundenen Nachteile möglichst weitgehend zu beheben. Der Erfindung lag somit insbesondere die Aufgabe zugrunde, bei einem Ladungsträger der eingangs bezeichneten Art eine verbesserte Möglichkeit der Anbringung von Befestigungs-Hilfsmitteln wie beispielsweise Spanngurten bereitzustellen.

Die Erfindung löst die ihr zugrunde liegende Aufgabe bei dem Ladungsträger der eingangs bezeichneten Art, indem der Ladungsträger eine Anzahl von Zurrhaken aufweist, die zur Krafteinleitung in den Ladungsträger jeweils mit einem der Rollenkästen gekoppelt sind. Die Erfindung macht sich hierbei die folgenden Erkenntnisse zunutze: Zunächst hat es sich als vorteilhaft herausgestellt, eine Anzahl, womit eine Einzahl oder bevorzugte Mehrzahl gemeint ist, von Zurrhaken koppelbar, also reversibel durch Koppeln und Entkoppeln lösbar bzw. verbindbar an den Ladungsträger anbringen zu können. Nicht benötigte Zurrhaken müssen auf diese Weise nicht am Ladungsträger befestigt werden und somit auch nicht mit transportiert werden. Dies hilft beim Sparen von Zuladungsgewicht und sorgt im Betrieb auch für weniger Behinderungen, da die Zurrhaken erfindungsgemäß sich nach oben auf der Ladefläche, von dieser weg erstrecken.

Eine weitere Erkenntnis fußt darauf, dass die Zurrhaken bei einem Spannen der mit ihnen verbundenen Spannmittel teils erhebliche Kräfte, aufgrund der wirkenden Hebelkräfte, in den Ladungsträger einleiten. Verstärkt wird dies durch unruhige Transportbedingungen, beispielsweise Schläge in vertikaler Richtung. Konventionell befestigte Zurrpunkte, beispielsweise auf die Oberfläche eines Ladungsträgers genietete Zurrpunkte, würden hierbei der Gefahr ausgesetzt, dass sie aus der Ladungsträgeroberfläche ausreißen und somit zum einen die Ladung ungewollt freisetzen, zum anderen aber auch den Ladungsträger beschädigen, was hohe Instandsetzungskosten zur Folge hätte. Dadurch, dass die Zurrhaken erfindungsgemäß aber nicht unmittelbar mit der Oberfläche des Ladungsträgers, sondern zur Krafteinleitung mit jeweils einem der Rollenkästen gekoppelt sind, wird dieses Problem vermieden. Die Rollenkästen sind zum einen jeweils einzeln in die Unterseite des Ladungsträgers eingelassen und auch einzeln wechselbar. Sollte also tatsächlich eine Beschädigung des Koppelmechanismus zwischen Zurrhaken und Rollenkasten auftreten, ist es mit wenig Aufwand möglich, die jeweils betroffene Rolle bzw. den Rollenkasten auszutauschen. Zum anderen ermöglicht es die Koppelung mit den Rollenkästen, pro verwendeter Rolle einen Zurrhaken am Ladungsträger vorzusehen, was bei der großen Zahl von Rollen pro Ladungsträger eine extrem hohe Flexibilität bei der Anbringung der Zurrhaken bedeutet. Noch ein weiterer Vorteil ist derjenige, dass das Befestigen der Ladung mittels der Spannmittel über die Zurrhaken notwendigerweise immer dann auch da vorgenommen wird, wo sich Rollen befinden. Wird Ladung auf dem Ladungsträger positioniert und festgezurrt, kann der Ladungsträger an der betreffenden Stelle nicht durchhängen, weil an ihm mittels der Zurrhaken die Rollenkästen und Rollen befestigt sind, auf denen der Ladungsträger, und somit die Ladung, steht.

Die Erfindung wird dadurch vorteilhaft weitergebildet, dass der Ladungsträger im Bereich eines, mehrerer oder sämtlicher Rollenkästen jeweils eine Ausnehmung aufweist, indem einer, mehrere oder sämtliche Rollenkästen im Bereich der jeweiligen Ausnehmung ein Koppelmittel aufweisen, und indem die Anzahl von Zurrhaken ein durch die Ausnehmung hindurch mit dem Koppelmittel der Rollenkästen in Eingriff bringbares Koppelmittel aufweist bzw. aufweisen. Die Ausnehmung fungiert so als eine Art Schlüsselloch für das Koppelmittel des Zurrhakens.

Vorzugsweise sind die Rollenkästen des Ladungsträgers auf der Unterseite des Ladungsträgers in der Beförderungsrichtung A in vier Bahnen nebeneinander angeordnet. In Kombination damit, dass grundsätzlich jeder Rollenkasten gemäß einer bevorzugten Ausführungsform ein Koppelmittel zur Aufnahme des Zurrhakens aufweist, und der Ladungsträger an jeder Stelle, an der ein Rollenkasten eingelassen ist, eine entsprechende Ausnehmung zur Hindurchführung des Zurrhakens aufweist, sind durch die vier nebeneinander befindlichen Rollenbahnen zahlreiche Möglichkeiten geschaffen, Zurrhaken nicht nur an der linken und rechten Außenseite des Ladungsträgers, sondern auch über den mittleren Rollenbahnen, also näher im Zentrum (in Querrichtung) des Ladungsträgers Zurrhaken anzubringen.

Bei einer bevorzugten Ausführungsform des Ladungsträgers sind die Rollenkästen durch eine unterseitige Ausnehmung in dem Ladungsträger teilweise in diesen eingeführt und weisen ein oder mehrere, an der Unterseite des Ladungsträgers anliegende Flächenelemente zur Kraftübertragung auf den Ladungsträger auf. Die ein oder mehreren Flächenelemente sind vorzugsweise am Rollenkasten ausgebildet und erstrecken sich in eingesetztem Zustand des Rollenkastens parallel und flächig aufliegend entlang der Unterseite des Ladungsträgers. Alternativ wäre auch eine Ausrichtung der Flächenenden in Richtung der Oberseite eines Hohlraums in dem Ladungsträger denkbar. Wesentlich ist, dass die Rollenkästen mittels des einen oder der mehreren Flächenelemente eine im Vergleich zur Fläche des Zurrhakens bzw. dessen Koppelmittels große Kontaktfläche mit dem Ladungsträger haben. So werden eingeleitete Zugkräfte mit weniger hohen Spannungsspitzen in den Ladungsträger eingeleitet, was ein Materialversagen weniger wahrscheinlich macht.

Die Rollenkästen sind vorzugsweise im Bereich des oder der Flächenelemente kraft-, form- oder stoffschlüssig mit dem Ladungsträger verbunden. Die Rollenkästen können beispielsweise geschraubt, genietet, geklebt, gelötet oder geschweißt werden. Eine reversible lösbare Verbindung, wie beispielsweise eine Schraubverbindung, wird aber mit Blick auf die Austauschbarkeit der Rollenkästen als besonders bevorzugt angesehen.

Das Koppelmittel in dem Rollenkasten und das Koppelmittel an dem Zurrhaken bilden in einer besonders bevorzugten Ausführungsform der Erfindung eine Drehverriegelung. Vorzugsweise ist das Koppelmittel in dem Rollenkasten als unrunde Ausnehmung, vorzugsweise als Langloch, quer zur Beförderungsrichtung A des Ladungsträgers ausgebildet. Das Koppelmittel an dem Zurrhaken ist wiederum vorzugsweise mit einem Verriegelungsabschnitt ausgebildet, der in der ersten Drehstellung des Zurrhakens durch die unrunde Ausnehmung hindurchführbar ist, und in einer zweiten, von der ersten Drehstellung verschiedenen Drehstellung, nicht durch die unrunde Ausnehmung hindurchführbar ist. Der einfachste Fall ist derjenige, in welchem die unrunde Ausnehmung ein Langloch ist. Der Zurrhaken weist dann ein hakenförmiges Koppelmittel auf, welches einen oder zwei auseinanderspreizende Schenkel aufweisen kann, beispielsweise nach dem Vorbild eines Ankers, welche in der ersten Drehstellung durch das Langloch hindurchpassen. Nach Drehen des Zurrhakens in durch die Ausnehmung des Ladungsträgers und die unrunde Ausnehmung im Rollenkasten hindurch von der ersten Drehstellung in eine zweite Drehstellung, beispielsweise um 90°, werden die Haken, wird also das Koppelmittel des Zurrhakens, aus dem Bereich des Langlochs herausgeschwenkt und stößt bei einer Zugbelastung des Zurrhakens gegen eine innenseitige Wandung des Rollenkastens, und wird somit verriegelt.

Vorzugsweise weist der Zurrhaken eine Öse auf, die in der zweiten Drehstellung in senkrecht zur Beförderungsrichtung A ausgerichtet ist. Dies ist insbesondere vorteilhaft, wenn Ladung auf dem Ladungsträger in Querrichtung verspannt werden soll. Aber auch andere zweite Drehstellungen sind möglich, beispielsweise zum diagonalen Verspannen von Ladung über den Längsträger. Wichtig ist hierbei lediglich, dass das Koppelmittel an dem Zurrhaken nicht in der ersten Drehstellung positioniert ist, in welcher es wieder aus der Ausnehmung des Rollenkastens und der Ausnehmung in dem Ladungsträger hindurch ausgeführt werden kann.

Die Erfindung wird im Folgenden unter Bezugnahme auf die beigefügten Figuren anhand eines bevorzugten Ausführungsbeispiels näher beschrieben. Hierbei zeigen:
- Figur 1: eine Draufsicht auf die Oberseite eines Ladungsträgers gemäß dem bevorzugten Ausführungsbeispiel der Erfindung,
- Figur 2: eine Draufsicht auf die Unterseite des Ladungsträgers gemäß Figur 1,
- Figur 3: eine räumliche schematische Detailansicht des Ladungsträgers gemäß den Figuren 1 und 2,
- Figur 4: eine weitere räumliche schematische Detailansicht des Ladungsträgers gemäß den Figuren 1 bis 3,
- Figur 5: eine weitere räumliche schematische Detailansicht des Ladungsträgers gemäß den Figuren 1 bis 4 in einem anderen Montagezustand, und
- Figur 6: eine Seitenansicht der Darstellung gemäß Figur 5.

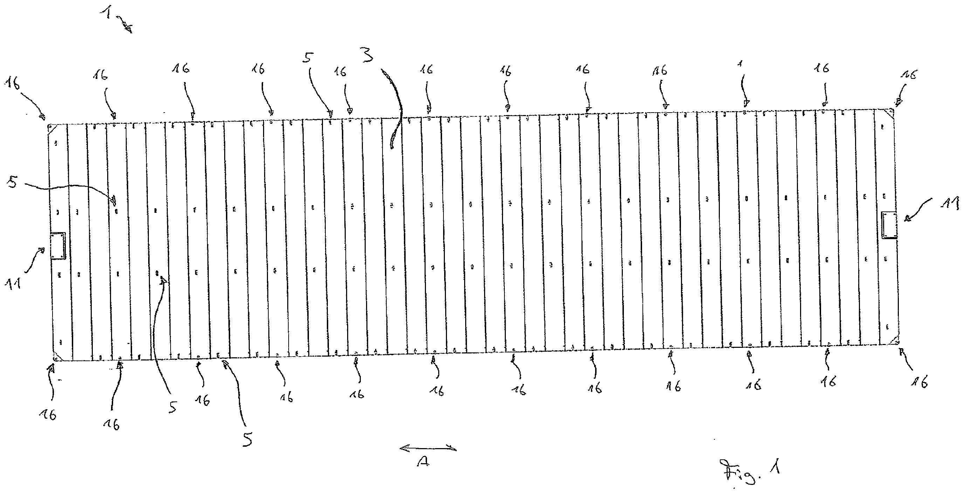

Figur 1 zeigt eine Draufsicht auf einen Ladungsträger 10. Der Ladungsträger 1 ist im Wesentlichen an die Ausmaße der Ladefläche eines Fahrzeugs, z. B. eines LKWs oder Anhängers oder Aufliegers angepasst. So kann beispielsweise der Ladungsträger 1 in seiner Längsrichtung A eine Länge von 13,405 m und in ihrer Querrichtung B eine Breite von 2,440 m aufweisen.

Der Ladungsträger 1 ist dazu vorgesehen, die Ladefläche eines Fahrzeugs nachzubilden. So kann der Ladungsträger 1 z. B. im Rahmen eines Logistiksystems dazu verwendet werden, mit Gütern beladen auf die Ladefläche eines Fahrzeugs verfahren oder von der Ladefläche des Fahrzeugs heruntergefahren zu werden. Hierdurch lässt sich der Vorgang des Be- bzw. Entladens eines Fahrzeugs mit Gütern erheblich beschleunigen, da nicht die Ladefläche des Fahrzeugs z. B. palettenweise durch einen Gabelstapler ent- bzw. beladen werden muss, sondern die Ladefläche des Fahrzeugs als Ganzes in Form des Ladungsträgers 1 ausgetauscht werden kann.

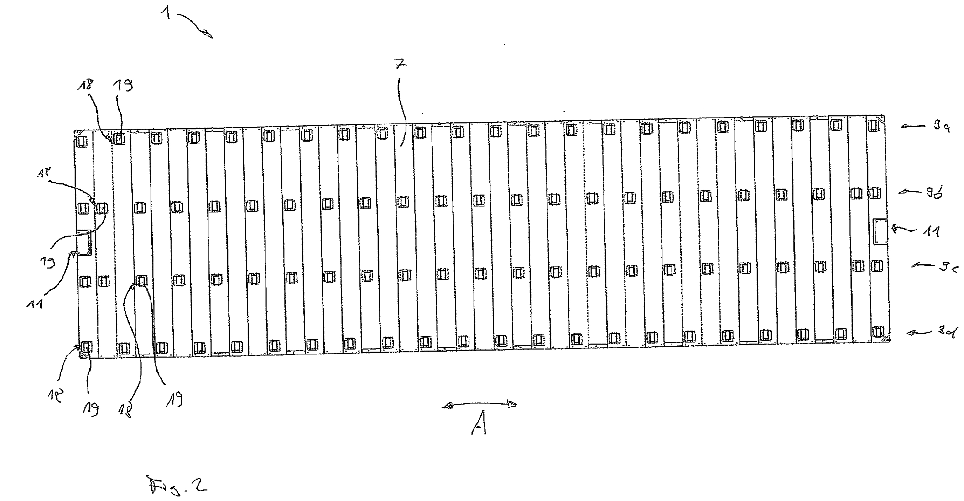

Der Ladungsträger 1 wird hierzu in der Beförderungsrichtung A verfahren. Der Ladungsträger 1 weist hierzu an seiner Unterseite eine Vielzahl von Rollen 19 auf, die in Rollenkästen 18 aufgenommen werden (siehe Figur 2). Auf ihrer Oberseite 3 ist der Ladungsträger 1 im Wesentlichen als ebene und glatte Fläche ausgebildet, damit Waren z. B. auf Paletten flexibel auf der Ladungsträger 1 angeordnet werden können. Figur 1 zeigt ferner, dass der Ladungsträger 1 an seiner Oberseite 3 eine Vielzahl von Aufnahmebereichen 5 für koppelbare, d.h. reversibel lös- und befestigbare Zurrhaken aufweist. Die Aufnahmebereiche 5 sind im Wesentlichen regelmäßig entlang der Oberfläche des Ladungsträgers 1 verteilt und befinden sich jeweils in Bereichen, in denen auf der Unterseite des Ladungsträgers 1 (siehe Figur 2) Rollenkästen 18 eingelassen sind.

Ferner kann die Oberfläche des Ladungsträgers 1 mit Rillen oder Vertiefungen ausgestaltet sein, um die Rauigkeit der Oberfläche des Ladungsträgers 1 zu erhöhen. Hierdurch kann, insbesondere bei Feuchtigkeit, die Rutschgefahr z. B. für Personen oder auch Gabelstapler verringert werden.

Um von der Ladefläche herunter bzw. aus einer Übergabestation herausgezogen zu werden, weist der Ladungsträger 1 an zumindest einer seiner schmalen Kanten wenigstens ein Eingriffsmittel 11 auf.

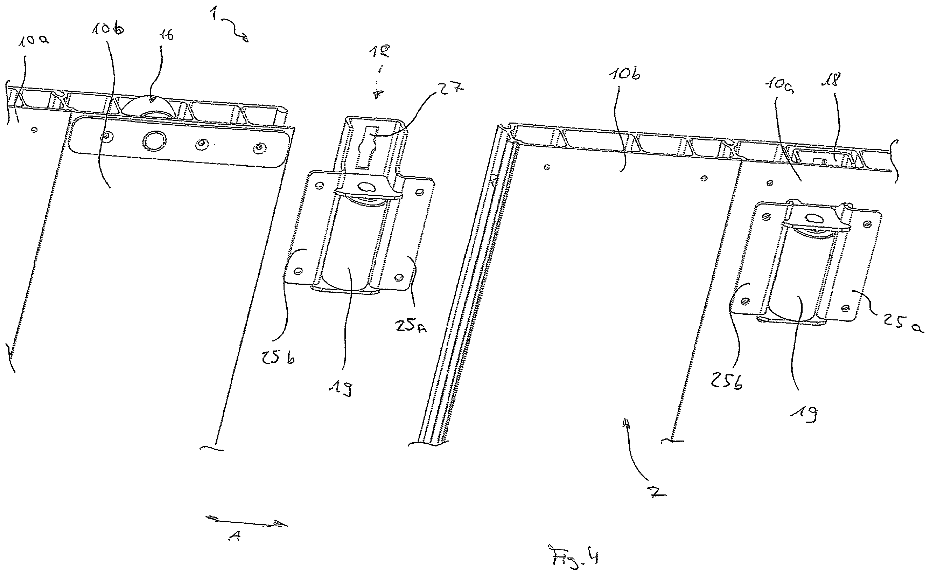

Ferner zeigt die Figur 1 an allen vier Ecken des Ladungsträgers 1 und an den längeren Seitenwänden seitliche Rollen 16, die sowohl in Längs- als auch in Querrichtung derart geringfügig über die Maße des Ladungsträgers 1 hinausragen, dass sie den Ladungsträger 1 z. B. gegenüber einer Seitenwand der Ladefläche eines LKWs abrollen lassen können, jedoch die Maße des Ladungsträgers 1 nicht wesentlich vergrößern (siehe auch Figur 4).

Figur 2 zeigt die Unterseite 7 des Ladungsträgers. Die Segmente und Bezugszeichen entsprechen denen der Figur 1. Ferner zeigt Figur 2 die in die Unterseite des Ladungsträgers 1 eingelassenen Rollenkästen 18, in denen die Rollen 19 vorgesehen sind. In Figur 2 ist dargestellt, dass auf der Unterseite 7 des Ladungsträgers 1 die Vielzahl der Rollenkästen mit den Rollen 19 in vier Rollenbahnen 9a,b,c,d in Richtung der Beförderungsrichtung A angeordnet sind.

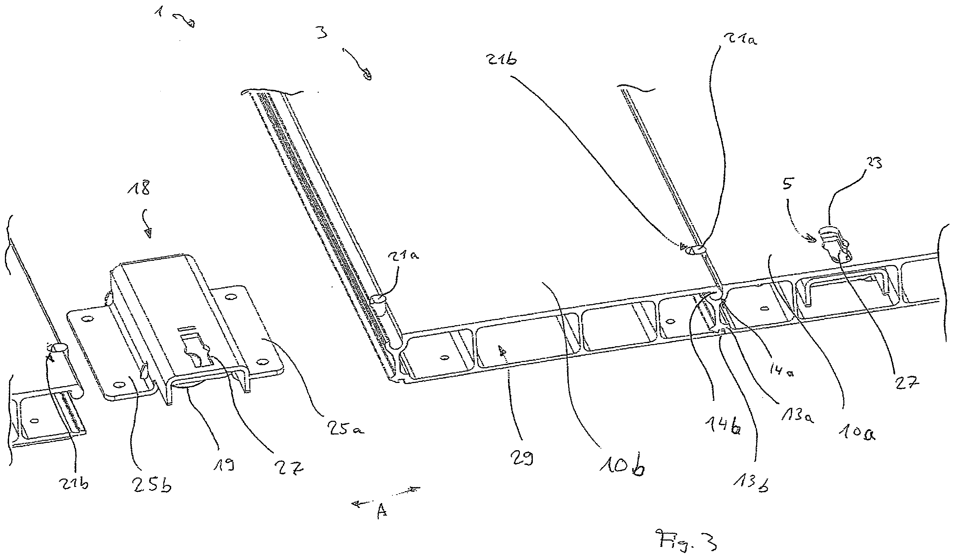

Figur 3 zeigt eine perspektivische Ansicht des Ladungsträgers 1 von oben. Figur 4 zeigt eine weitere perspektivische Draufsicht des Ladungsträgers 1 von unten.

Ferner ist dargestellt, dass die Rollen 19 in den Rollenkästen 18 in den Ladungsträger 1 derart eingelassen sind, dass sie lediglich geringfügig über die Unterseite des Ladungsträgers 1 hinausragen. Hierdurch kann eine möglichst flache und kompakte Bauweise des Ladungsträgers 1 erreicht werden, so dass durch den Ladungsträger 1 der Ladefläche des LKWs lediglich eine geringe Höhe in Anspruch genommen wird, vorzugsweise 50 mm oder weniger.

Eine Besonderheit der erfindungsgemäßen Ladungsträger 1 ist es, dass diese modular aus einzelnen Segmenten aufgebaut werden kann. Hierdurch kann sehr einfach ein Ladungsträger 1 in verschiedenen Längen bereitgestellt werden, um den erfindungsgemäßen Ladungsträger 1 an die Länge einer Ladefläche eines Fahrzeugs anzupassen. Hierzu wird erfindungsgemäß das Prinzip des Zusammenklickens einzelner Ladungsträgersegmente 10a, 10b verwendet.

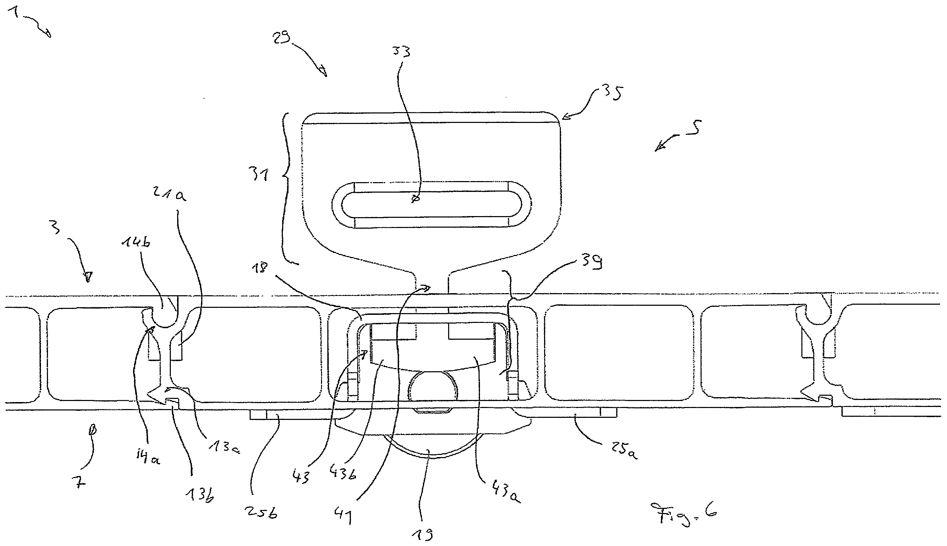

Hierzu weist ein erstes Ladungsträgersegment 10a ein Verriegelungselement 13a auf, welches in eine Verriegelungsaufnahme 13b des zweiten Ladungsträgersegments 10b einrasten kann. In der Figur 3 und 6 ist das Verriegelungselement 13a als Haken vorgesehen, welches hinter eine Kante greift und dort einrastet, die der Verriegelungsaufnahme 13b entspricht. Dabei ist das Verriegelungselement 13a derartig ausgestaltet, dass es beim Zusammenführen des ersten Verriegelungselements 13a mit dem zweiten Verriegelungselement 13b durch die Verriegelungsaufnahme 13b zunächst von dieser weggedrückt wird und schließlich in dieser Verriegelungsaufnahme 13b einrastet, um das erste Ladungsträgersegment 10a und das zweite Ladungsträgersegment 10b miteinander zu verriegeln.

Der Ladungsträger 1 weist ferner an dem ersten Ladungsträgersegment 10a eine Aussparung 14a auf, in die ein Vorsprung 14b des zweiten Ladungsträgersegments 10b eingeführt werden kann. Der Vorsprung 14b und die Aussparung 14a sind dabei derart vorgesehen, dass das zweite Ladungsträgersegment 10b gegenüber dem ersten Ladungsträgersegment 10a eine Schwenkbewegung ausführen kann. Dabei sind die Aussparung 14a und der Vorsprung 14b an der Oberseite des Ladungsträgers 1 vorgesehen und das Verriegelungselement 13a und die Verriegelungsaufnahme 13b an der Unterseite des Ladungsträgers 1. Hierdurch kann das zweite Ladungsträgersegment 10b mit seinem Vorsprung 14b in die Aussparung 14a des ersten Ladungsträgersegmentes 10a von oben eingesetzt werden, um die beiden Ladungsträgersegmente 10a, 10b zunächst zueinander zu positionieren. Dabei wird das zweite Ladungsträgersegment 10b gegenüber dem ersten Ladungsträgersegment 10a bzw. gegenüber der horizontalen Ebene z. B. um einen Winkel von 45 Grad hochgeklappt. Aus dieser Position kann nun das zweite Ladungsträgersegment 10b um die Achse B in die Horizontale heruntergeklappt werden. Dabei wird das Verriegelungselement 13a durch die Verriegelungsaufnahme 13b zunächst angehoben, bis das Verriegelungselement 13a z. B. als Haken in der Verriegelungsaufnahme 13b z. B. als Kante einrastet. Hierdurch werden die beiden Ladungsträgersegmente 10a, 10b ähnlich miteinander verbunden.

An der Schnittstelle 14a,b zwischen den benachbarten Ladungsträgersegmenten 10a,b sind zudem Positioniermittel 21a,b angeordnet. Das Ladungsträgersegment 10a,b weist jeweils in seiner Aussparung 14a einen Positionierstift 21a auf, der dazu ausgebildet ist, in eine korrespondierende Ausnehmung 21b an dem Vorsprung 14b des jeweiligen Ladungsträgersegments 19a,b eingesetzt zu werden. Vorzugsweise ist die Einpassung im Wesentlichen spielfrei, so dass eine bündige Seitenkante des Ladungsträgers 1 erreicht wird.

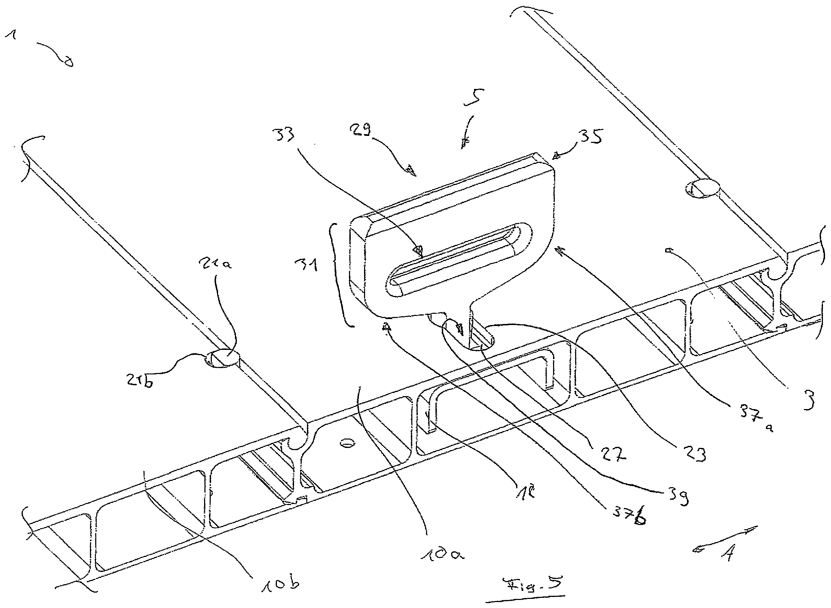

In Figur 3 ist ferner der Aufnahmebereich 5 für einen Zurrhaken 29 (siehe Figuren 5 und 6) näher dargestellt. Der Ladungsträger 1 weist eine Anzahl, vorzugsweise eine Vielzahl von Ausnehmungen 23 auf. Die Ausnehmungen 23 erstrecken sich jeweils im Bereich der eingelassenen Rollenkästen 18 durch das Material der Ladungsträgeroberfläche hindurch und geben den Blick bis zum Rollenkasten 18 frei.

Der Rollenkasten 18 weist jeweils, in eingelassener Position, eine unrunde Ausnehmung 27 auf. Im gezeigten Ausführungsbeispiel ist die unrunde Ausnehmung 27 als Langloch ausgebildet. Das Langloch 27 dient als zweites Koppelmittel zur Aufnahme des an dem Zurrhaken ausgebildeten ersten Koppelmittels.

Die Rollenkästen 18 sind jeweils in einem Innenraum 29 des Ladungsträgers angeordnet, welcher sich zwischen der Oberseite 3 und der Unterseite 7 des Ladungsträgers 1 ausbildet.

Gemäß dem bevorzugten Ausführungsbeispiel ist die Ausnehmung 23 in der Oberseite 3 des Ladungsträgers 1 ebenfalls als Langloch ausgebildet.

Figur 4 zeigt die Darstellung gemäß Figur 3 von einer schräg unten liegenden Sicht aus. Wie in Figur 3 ist auch hier zu Veranschaulichungszwecken ein Ladungsträgersegment 10a ausgeblendet. Im Bereich der Anbringung der seitlichen Rolle 16 am Ladungsträgersegment 10b ist an der Unterseite 7 ein Schweißteil angebracht, bestehend aus einem sichtbaren Blech und einer mit dem Blech verschweißten Achse für die seitliche Rolle.

Ferner ist in Figur 4 dargestellt, dass der Rollenkasten 18 jeweils ein erstes und zweites Flächenelement 25a,b aufweist, welches in eingelassenem Zustand des Rollenkastens in dem Ladungsträger 1 flächig an der Unterseite 7 des Ladungsträgers 1 anliegt. Wie ferner in Figur 4 zu erkennen ist, ist an dem Rollenkasten 18 die das zweite Koppelmittel bildende Ausnehmung 27 horizontal benachbart zu der Rolle 19 und ihrer Lagerung angeordnet.

Nachdem die Figuren 1 bis 4 den Ladungsträger und dessen Aufnahmebereich 5 zur Aufnahme eines Zurrhakens ohne den Zurrhaken zum Zwecke der Veranschaulichung gezeigt haben, zeigt Figur 5 nun eine Einbausituation des Ladungsträgers 1 mit aufgenommenem Zurrhaken. Es ist in Figur 5 ein Zurrhaken 29 abgebildet, welcher in einem Aufnahmebereich 5 angeordnet ist. Der Zurrhaken 29 weist einen Spannabschnitt 31 auf. Der Spannabschnitt 31 weist eine Öse 33 auf, durch die ein Spannmittel, beispielsweise ein Spanngurt, hindurchgeführt werden kann. Auf einer oberen umlaufenden Kante des Spannabschnitts 31 sind Abflachungen 35 ausgebildet, welche beispielsweise Fasen, oder aber auch Rundungen sein können. Diese Abflachungen ermöglichen es, den Verschleiß von Spannmitteln mit dem Zurrhaken zu vermindern.

Der Zurrhaken 29 weist ferner an den äußeren Seitenbereichen des Spannabschnitts 31 beiderseitig Verjüngungen 37a,b auf. Diese erleichtern das Handling des Zurrhakens 29 und verhindern ein Verkanten oder Verklemmen auf der Oberseite 3 des Ladungsträgers 1. Vorzugsweise hat der Spannabschnitt 31 des Zurrhakens 29 keinen Kontakt mit der Oberseite des Ladungsträgers 1.

Der Zurrhaken 29 weist ferner einen Koppelabschnitt 39 auf. Der Koppelabschnitt 39 ist in einer (nicht dargestellten) ersten Drehstellung durch die Ausnehmungen 23, 27 hindurchgeführt worden, und sodann von der ersten Drehstellung in eine (in Figur 5 und 6 gezeigte) zweite Drehstellung verbracht worden, in welcher der Zurrhaken 29 am Rollenkasten 18, welcher darunterliegt, verriegelt ist.

Ein weiterer Blick hierauf wird in Figur 6, die eine Seitenansicht der räumlichen Darstellung von Figur 5 darstellt, möglich. Der Koppelabschnitt 39 des Zurrhakens 29 weist einen Führungs- bzw. Drehzapfen 41 auf, der in montiertem Zustand im Bereich der Ausnehmungen 23, 27 liegt. An den Zapfen 41 anschließend ist ein Verriegelungskopf 43 ausgebildet, welcher das erste Koppelmittel des Zurrhakens 29 bildet. Der Verriegelungskopf 43 weist einen ersten und zweiten Schenkel 43a,b auf, deren Dimensionen an die Ausnehmungen 23, 27 angepasst sind, so dass das erste Koppelmittel in der (nicht gezeigten) ersten Drehstellung des Zurrhakens 29 in den Rollenkasten 18 einführbar ist. In dem gezeigten Ausführungsbeispiel ist die erste Drehstellung um 90° um eine vertikale Achse zu der gezeigten zweiten Drehstellung gedreht. Wird der Zughaken in der Orientierung gemäß den Figuren 5 und 6 auf Zug belastet, also beispielsweise in Figur 6 nach oben, gelangen die Schenkel 43a,b des ersten Koppelmittels in Anlage mit dem Grundkörper des Rollenkastens 18. Kräfte werden über den Rollenkasten 18 zu den Flächenelementen 25a,b geleitet, von wo aus sie, verteilt auf deren große Fläche, in den Ladungsträger 1 an dessen Unterseite 7 eingeleitet werden. Durch die Beabstandung des Rollenkastens 18 von der Oberseite 3 des Ladungsträgers 1 wird durch Zugbeanspruchung die Oberseite des Ladungsträgers 1 vorzugsweise nicht unmittelbar beeinflusst.

## Patentansprüche

1. Ladungsträger (1) zur Verwendung in einem Logistiksystem, um in einer Beförderungsrichtung (A) von der Ladefläche eines Fahrzeugs übernommen und/oder an die Ladefläche des Fahrzeugs übergeben zu werden, wobei der Ladungsträger (1) im Wesentlichen Ausmaße aufweist, die der Ladefläche des Fahrzeugs angepasst sind,
wobei der Ladungsträger (1) mehrere auf seiner Unterseite (7) eingelassene Rollenkästen (18) mit darin aufgenommenen Rollen (19) aufweist, um auf diesen Rollen (19) in der Beförderungsrichtung (A) verfahren zu werden,
**dadurch gekennzeichnet, dass** der Ladungsträger (1) eine Anzahl von Zurrhaken (29) aufweist, die zur Krafteinleitung in den Ladungsträger (1) jeweils mit einem der Rollenkästen (18) gekoppelt sind.

2. Ladungsträger (1) nach Anspruch 1,
wobei der Ladungsträger (1) im Bereich eines, mehrerer oder sämtlicher Rollenkästen (18) jeweils eine Ausnehmung (23) aufweist,
einer, mehrere oder sämtliche Rollenkästen (18) im Bereich der jeweiligen Ausnehmung ein Koppelmittel (27) aufweisen, und
die Anzahl von Zurrhaken (29) ein durch die Ausnehmung (23) hindurch mit dem Koppelmittel (27) der Rollenkästen (18) in Eingriff bringbares Koppelmittel (43) aufweisen.

3. Ladungsträger (1) nach Anspruch 1 oder 2,
wobei die Rollenkästen (18) auf der Unterseite (7) des Ladungsträgers in der Beförderungsrichtung (A) in vier Bahnen (9a-d) nebeneinander angeordnet sind.

4. Ladungsträger (1) nach einem der vorstehenden Ansprüche,
wobei die Rollenkästen (18) durch eine unterseitige Ausnehmung teilweise in den Ladungsträger (1) eingeführt sind und ein oder mehrere, an der Unterseite (7) des Ladungsträgers (1) anliegende Flächenelemente (25a,b) zur Kraftübertragung auf den Ladungsträger (1) aufweisen.

5. Ladungsträger (1) nach Anspruch 4,
wobei die Rollenkästen (18) im Bereich des oder der Flächenelemente (25a,b) kraft-, form- oder stoffschlüssig mit dem Ladungsträger (1) verbunden sind.

6. Ladungsträger (1) nach einem der vorstehenden Ansprüche 2-5, wobei das Koppelmittel (27) in dem Rollenkasten (18) und das Koppelmittel (43) an dem Zurrhaken (29) eine Drehverriegelung bilden.

7. Ladungsträger nach Anspruch 6;
wobei das Koppelmittel (27) in dem Rollenkasten (18) als unrunde Ausnehmung (27), vorzugsweise als Langloch, quer zur Beförderungsrichtung (A) des Ladungsträgers (1) ausgebildet ist.

8. Ladungsträger nach Anspruch 7,
wobei das Koppelmittel (43) an dem Zurrhaken (29) einen Verriegelungsabschnitt (43) aufweist, der in einer ersten Drehstellung des Zurrhakens (29) durch die unrunde Ausnehmung hindurchführbar ist, und in einer zweiten, von der ersten verschiedenen Drehstellung nicht durch die unrunde Ausnehmung hindurchführbar ist.

9. Ladungsträger nach Anspruch 8,
wobei der Zurrhaken (29) eine Öse (51) aufweist, die in der zweiten Drehstellung senkrecht zur Beförderungsrichtung (A) ausgerichtet ist.

## Claims

1. Load carrier (1) for use in a logistics system, to be taken from the loading surface of a vehicle in conveying direction (A) and/or transferred to the loading surface of the vehicle, wherein the load carrier (1) essentially has dimensions which are adapted to the loading surface of the vehicle, wherein the load carrier (1) comprises a plurality of roller boxes (18) recessed into its lower side (7) with rollers (19) mounted therein in order to be driven on said rollers (19) in conveying direction (A), **characterised in that** the load carrier (1) comprises a number of lashing hooks (29), which are coupled respectively to one of the roller boxes (18) for the application of force to the load carrier (1).

2. Load carrier (1) according to claim 1,
wherein the load carrier (1) comprises a recess (23) in the area of one, several or all of the roller boxes (18) respectively,
one, several or all of the roller boxes (18) comprise a coupling means (27) in the area of the respective recess, and
the plurality of lashing hooks (29) have a coupling means (43) which can be brought into engagement with the coupling means (27) of the roller boxes (18) through the recess (23).

3. Load carrier (1) according to claim 1 or 2, wherein the roller boxes (18) are arranged next to one another in four tracks (9a -d) on the underside (7) of the load carrier in conveying direction (A).

4. Load carrier (1) according to any of the preceding claims, wherein the roller boxes (18) are introduced partly into the load carrier (1) through a lower recess and comprise one or more surface elements (25a,b) bearing on the lower side (7) of the load carrier (10) for transmitting force to the load carrier (1).

5. Load carrier (1) according to claim 4, wherein the roller boxes (18) are connected in the area of the surface element or elements (25a,b) to the load carrier (1) in a form-fitting or securely bonded manner.

6. Load carrier (1) according to any of the preceding claims 2-5, wherein the coupling means (27) in the roller box (18) and the coupling means (43) on the lashing hook (29) form a twist lock.

7. Load carrier according to claim 6, wherein the coupling means (27) in the roller box (18) is designed as a non-round recess (27), preferably an elongated hole, perpendicular to the conveying direction (A) of the load carrier (1).

8. Load carrier according to claim 7, wherein the coupling means (43) comprises a locking section (43) on the lashing hook (29), which locking section can be guided in a first rotary position of the lashing hook (29) through the non-round recess, and in a second rotary position, different from the first, cannot be guided through the non-round recess.

9. Load carrier according to claim 8, wherein the lashing hook (29) comprises an eyelet (51) which is aligned in the second rotary position perpendicular to the conveying direction (A).

## Revendications

1. Support de chargement (1) destiné à être utilisé dans un système logistique afin d'être repris dans un sens de transport (A) de la surface de charge d'un véhicule et/ou remis à la surface de charge du véhicule, dans lequel le support de chargement (1) présente sensiblement des dimensions qui sont adaptées à la surface de charge du véhicule,
dans lequel le support de chargement (1) présente plusieurs caisses à rouleaux (18) encastrées sur son côté inférieur (7) avec des rouleaux (19) reçus dans celles-ci afin d'être déplacé sur ces rouleaux (19) dans le sens de transport (A),
**caractérisé en ce que** le support de chargement (1) présente un nombre de crochets d'amarrage (29) qui sont couplés, pour l'introduction de force dans le support de chargement (1), respectivement avec une des caisses à rouleaux (18).

2. Support de chargement (1) selon la revendication 1,
dans lequel le support de chargement (1) présente dans la zone d'une, de plusieurs ou de toutes les caisses à rouleaux (18) respectivement un évidement (23),
une, plusieurs ou toutes les caisses à rouleaux (18) présentent dans la zone de l'évidement respectif un moyen de couplage (27), et
le nombre de crochets d'amarrage (29) présente un moyen de couplage (43) pouvant être amené en prise au travers de l'évidement (23) avec le moyen de couplage (27) des caisses à rouleaux (18).

3. Support de chargement (1) selon la revendication 1 ou 2,
dans lequel les caisses à rouleaux (18) sont disposées sur le côté inférieur (7) du support de chargement dans le sens de transport (A) dans quatre voies (9a-d) les unes à côté des autres.

4. Support de chargement (1) selon l'une quelconque des revendications précédentes,
dans lequel les caisses à rouleaux (18) sont introduites par un évidement côté inférieur partiellement dans le support de chargement (1) et présentent un ou plusieurs éléments de surface (25a, b) reposant contre le côté inférieur (7) du support de chargement (1) pour la transmission de force au support de chargement (1).

5. Support de chargement (1) selon la revendication 4,
dans lequel les caisses à rouleaux (18) sont raccordées dans la zone du ou des éléments de surface (25a, b) à force, par complémentarité de formes ou par matière au support de chargement (1).

6. Support de chargement (1) selon l'une quelconque des revendications précédentes 2 à 5,
dans lequel le moyen de couplage (27) dans la caisse à rouleaux (18) et le moyen de couplage (43) au niveau du crochet d'amarrage (29) forment un verrouillage rotatif.

7. Support de chargement selon la revendication 6 ;
dans lequel le moyen de couplage (27) est réalisé dans la caisse à rouleaux (18) en tant qu'évidement non rond (27), de préférence en tant que trou oblong, transversalement au sens de transport (A) du support de chargement (1).

8. Support de chargement selon la revendication 7,
dans lequel le moyen de couplage (43) présente au niveau du crochet d'amarrage (29) une section de verrouillage (43) qui peut traverser dans une première position rotative du crochet d'amarrage (29) l'évidement non rond, et ne peut traverser dans une seconde position rotative différente de la première l'évidement non rond.

9. Support de chargement selon la revendication 8,
dans lequel le crochet d'amarrage (29) présente un oeillet (51) qui est orienté dans la seconde position rotative perpendiculairement au sens de transport (A).
